# EUROPÄISCHE PATENTSCHRIFT

(11) **EP 1 396 466 B1**
(45) Veröffentlichungstag und Bekanntmachung des Hinweises auf die Patenterteilung: **03.10.2007**
(21) Anmeldenummer: 03019251.2
(22) Anmeldetag: 26.08.2003
(51) Int. Cl.: B66F 9/075, B60S 5/06

(54) **Flurförderzeug mit einer seitlichen Batterieentnahmeöffnung**
Industrial truck with a lateral opening for the removal of the batteries
Chariot de manutention avec une ouverture latèrale d' enlèvement de batteries

(30) Priorität: 06.09.2002 DE 10241418
(43) Veröffentlichungstag der Anmeldung: 10.03.2004
(73) Patentinhaber: STILL GMBH, 22113 Hamburg (DE)
(72) Erfinder: Ballhausen, Stephan, 22421 Pinneberg (DE); Buchmann, Michael, 21509 Glinde (DE); Gerdes, Torsten, 21465 Wentorf (DE); Szymanski, Marek, 24306 Kleinmeisdorf Gemeinde Bösdorf (DE)
(74) Vertreter: Geirhos, Johann

(56) Entgegenhaltungen:
- DE-A- 3 839 618
- GB-A- 2 091 179
- US-A- 3 327 875
- PATENT ABSTRACTS OF JAPAN vol. 1996, no. 10, 31. Oktober 1996 (1996-10-31) -& JP 08 165094 A (NIPPON YUSOKI CO LTD), 25. Juni 1996 (1996-06-25)
- PATENT ABSTRACTS OF JAPAN vol. 2003, no. 01, 14. Januar 2003 (2003-01-14) -& JP 2002 274789 A (NIPPON YUSOKI CO LTD), 25. September 2002 (2002-09-25)

## Beschreibung

Die Erfindung betrifft ein Flurförderzeug, insbesondere Gabelstapler, mit einem Batteriefach und einem Batterieblock, der in horizontaler Richtung durch eine seitliche Öffnung des Batteriefachs relativ zu dem Batteriefach bewegbar ist, wobei eine Bodenfläche des Batteriefachs mit einer Rollenbahn ausgerüstet ist und die Rollenbahn zwei- oder mehrteilig ausgeführt ist, wobei mindestens ein Teil der Rollenbahn derart aus dem Batteriefach heraus bewegbar ist, dass der Batterieblock auf der Rollenbahn vollständig aus dem Flurförderzeug heraus bewegbar ist, und wobei das Flurförderzeug eine Haltevorrichtung aufweist, mit der ein unbeabsichtigtes Herausrollen des Batterieblocks aus dem Batteriefach verhindert ist.

Flurförderzeuge mit einer seitlichen Batterieentnahmeöffnung sind häufig mit einer Rollenbahn ausgerüstet, auf der ein Batterieblock mit relativ geringem Kraftaufwand verschoben werden kann. Um den Batterieblock vollständig aus dem Batteriefach heraus bewegen zu können, wird bei Flurförderzeugen des Standes der Technik neben dem Flurförderzeug eine externe Rollenbahn angeordnet, die dann an die zu dem Flurförderzeug gehörende Rollenbahn anschließt. Derartige externe Rollenbahnen können fest installiert sein. Bekannt ist es auch, externe Rollenbahnen verfahrbar, beispielsweise auf einem Handhubwagen anzuordnen. Ein Weitertransport des Batterieblocks erfolgt mittels dieses Handhubwagens, mittels eines Hallenkrans oder eines anderen Flurförderzeugs. Derartige Anordnungen zum Wechseln von Batterieblöcken werden für Flurförderzeuge verschiedenster Bauart, beispielsweise Elektro-Gegengewichtsgabelstapler, Schubmaststapler, Nieder- oder Hochhubwagen, eingesetzt. Ein Nachteil dieses bekannten Systems zum Batteriewechsel mit Rollenbahnen besteht darin, dass stets eine externe Rollenbahn vorgehalten werden muss, um den Batterieblock vollständig aus dem Flurförderzeug heraus bewegen zu können.

Aus der JP 08165094 A ist ein Flurförderzeug bekannt, das eine integrierte, ausziehbare Rollenbahn für den Batterieblock aufweist. An der Rollenbahn ist eine Stütze befestigt, die bei ausgefahrener Rollenbahn die Gewichtskraft des Batterieblocks an der Fahrbahn abstützt und dabei ein Abkippen der Rollenbahn oder des gesamten Flurförderzeugs verhindern soll.

Der Erfindung liegt die Aufgabe zugrunde, ein Flurförderzeug der eingangs genannten Art zur Verfügung zu stellen, bei dem ein Batteriewechsel sicher und ohne externe Rollenbahn möglich ist.

Diese Aufgabe wird erfindungsgemäß dadurch gelöst, die Haltevorrichtung derart mit der Rollenbahn in Wirkverbindung, das ein Herausrollen des Batterieblocks aus dem Batteriefach nur bei vollständig ausgefahrenem und an der Fahrbahn abgestütztem bewegbaren Teil der Rollenbahn möglich ist. Damit sind auch Bedienungsfehler der Rollenbahn verhindert, beispielsweise ein Vergessen des Herunterklappens der Stütze oder ein unvollständiges Ausfahren der Rollenbahn. Die Rollenbahn des Flurförderzeugs ist zwei- oder mehrteilig ausgeführt, wobei mindestens ein Teil der Rollenbahn derart aus dem Batteriefach heraus bewegbar ist, dass der Batterieblock auf der Rollenbahn vollständig aus dem Flurförderzeug heraus bewegbar ist. Der vollständig außerhalb des Flurförderzeugs befindliche Batterieblock kann dann direkt, beispielsweise mittels eines Krans angehoben werden. Eine zusätzliche externe Rollenbahn ist nicht erforderlich. Bei der zwei- oder mehrteilig ausgeführten Rollenbahn des Flurförderzeugs verbleibt ein Teil stets am Boden des Batteriefachs. Während des Betriebs des Flurförderzeugs befinden sich auch die weiteren Teile der Rollenbahn innerhalb des Flurförderzeugs. Diese können jedoch zum Wechseln des Batterieblocks in Verlängerung des ersten Teils angeordnet werden, um den Batterieblock vollständig aus dem Flurförderzeug heraus bewegen zu können. Das Einsetzen eines neuen Batterieblocks erfolgt dann in umgekehrter Reihenfolge, der Batterieblock wird also z.B. mittels eines Krans auf der ausgefahrenen Rollenbahn abgesetzt und dann auf dieser in das Batteriefach hinein geschoben. Anschließend werden die bewegbaren Teile der Rollenbahn ebenfalls in das Batteriefach bewegt.

Bevorzugt weist die Rollenbahn also einen fahrzeugfesten Teil auf, der im Bereich des Bodens des Batteriefachs angeordnet ist.

Ebenso weist die Rollenbahn mindestens einen bewegbaren Teil auf, der sich in einer zurückgezogenen Stellung im Bereich des Bodens des Batteriefachs befindet und der in Verlängerung des fahrzeugfesten Teils in eine ausgefahrene Stellung ausfahrbar ist.

Gemäß einer zweckmäßigen Weiterbildung ist an dem bewegbaren Teil der Rollenbahn eine bewegbare Stütze vorgesehen, mit der die Rollenbahn an einer Fahrbahn abstützbar ist. Mit der Stütze kann die Gewichtskraft eines auf der Rollenbahn außerhalb des Flurförderzeugs befindlichen Batterieblocks direkt auf der Fahrbahn abgestützt werden. Dies ist erforderlich, da das große Gewicht des Batterieblocks sonst zu einem Kippen des Flurförderzeugs führen könnte.

Der bewegbare Teil der Rollenbahn weist einen Anschlag auf, der die Endlage des sich außerhalb des Flurförderzeugs auf der Rollenbahn befindlichen Batterieblocks definiert. Der Anschlag stellt sicher, dass der Batterieblock nicht über das Ende der Rollenbahn hinaus rollt und von der Rollenbahn fällt. lnsbesondere definiert der Anschlag aber die Position des Batterieblocks, in der sich der Batterieblock vollständig außerhalb des Flurförderzeugs befindet und damit gefahrlos angehoben werden kann.

Gemäß einer besonders zweckmäßigen Ausgestaltung ist der Anschlag bewegbar an dem bewegbaren Teil der Rollenbahn angeordnet ist, derart, dass der sich in der Endlage außerhalb des Flurförderzeugs auf der Rollenbahn befindliche Batterieblock nach außen über das Ende der Rollenbahn hinaus ragt. Andererseits ist der Anschlag derart bewegbar an dem bewegbaren Teil der Rollenbahn angeordnet, dass der Anschlag bei zurückgezogener Stellung des bewegbaren Teils vollständig innerhalb die Kontur des Flurförderzeugs bewegbar ist. Der bewegbare Anschlag ermöglicht eine Ausführung der Rollenbahn, bestehend aus einem feststehenden Teil und nur einem bewegbaren Teil, das an dem feststehenden Teil geführt ist.

Ein weiterer Vorteil ergibt sich, wenn der Anschlag als Griff zum Bewegen des bewegbaren Teils der Rollenbahn ausgeführt ist. Die Anzahl der Bauteile der

Rollenbahn wird damit minimiert.

Weitere Vorteile und Einzelheiten der Erfindung werden anhand des in den schematischen Figuren dargestellten Ausführungsbeispiels näher erläutert. Dabei zeigt
- Figur 1: eine ausgefahrene Rollenbahn in Draufsicht,
- Figur 2: eine ausgefahrene Rollenbahn in Seitenansicht.

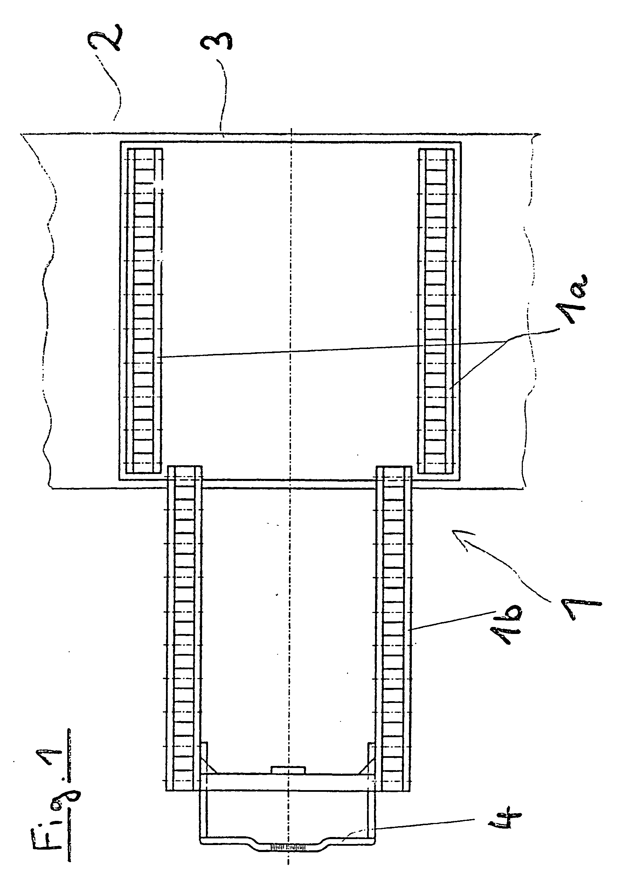

Figur 1 zeigt eine in einem Flurförderzeug angeordnete ausgefahrene Rollenbahn 1 mit einem fahrzeugfesten Teil 1a und einem bewegbaren Teil 1b in Draufsicht. Der fahrzeugfeste Teil 1 a ist vollständig innerhalb der Kontur 2 des Flurförderzeugs angeordnet. Ebenfalls zu erkennen sind die Umrisse eines auf der Rollenbahn 1 stehenden Batterieblocks 3, der sich in dem Batteriefach des Flurförderzeugs befindet. Der bewegbare Teil 1b der Rollenbahn befindet sich in seiner ausgezogenen Position.

Der Batterieblock 3 kann auf der Rollenbahn 1 nach in der Zeichnung links bis zu einem an dem bewegbaren Teil 1b angeordneten Anschlag 4 verschoben werden. Der Anschlag 4 dient gleichzeitig als Griff zum Bewegen des bewegbaren Teils 1b. Während des Betriebs des Flurförderzeugs werden der bewegbare Teil 1 b und der Anschlag nach in der Zeichnung rechts verschoben, so dass auch sie sich vollständig innerhalb der Kontur des Flurförderzeugs befinden.

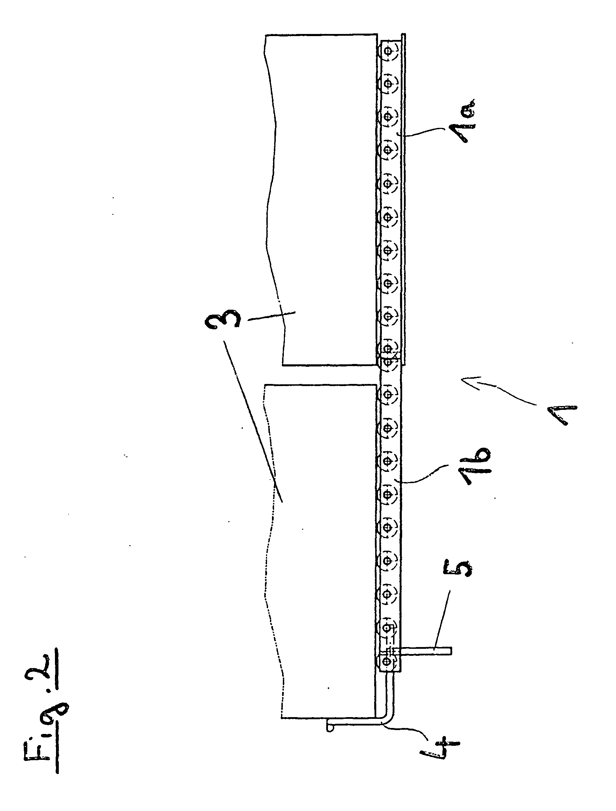

ln Figur 2 ist die Rollenbahn 1 gemäß Fig. 1 in Seitenansicht dargestellt. Der Batterieblock 3 ist rechts in seiner vollständig im Flurförderzeug befindlichen Position und links in seiner Position vollständig außerhalb des Flurförderzeugs dargestellt. Ein Herunterrollen des Batterieblocks 3 von der Rollenbahn 1 ist durch den Anschlag 4 verhindert. An dem bewegbaren Teil 1b der Rollenbahn 1 ist weiter eine klappbare Stütze 5 befestigt, mit der die Gewichtskraft des ausgefahrenen Teils 1b der Rollenbahn 1 und des darauf befindlichen Batterieblocks 3 auf der Fahrbahn abgestützt wird.

## Patentansprüche

1. Flurförderzeug, insbesondere Gabelstapler, mit einem Batteriefach und einem Batterieblock (3), der in horizontaler Richtung durch eine seitliche Öffnung des Batteriefachs relativ zu dem Batteriefach bewegbar ist, wobei eine Bodenfläche des Batteriefachs mit einer Rollenbahn (1) ausgerüstet ist und die Rollenbahn (1) zwei- oder mehrteilig ausgeführt ist, wobei mindestens ein Teil (1b) der Rollenbahn (1) derart aus dem Batteriefach heraus bewegbar ist, dass der Batterieblock (3) auf der Rollehbahn (1) vollständig aus dem Flurförderzeug heraus bewegbar ist, und wobei das Flurförderzeug eine Haltevorrichtung aufweist, mit der ein unbeabsichtigtes Herausrollen des Batterieblocks aus dem Batteriefach verhindert ist, **dadurch gekennzeichnet, dass** die Haltevorrichtung derart mit der Rollenbahn (1) in Wirkverbindung steht, dass ein Herausrollen des Batterieblocks aus dem Batteriefach nur bei vollständig ausgefahrenem und an der Fahrbahn abgestütztem bewegbaren Teil (1b) der Rollenbahn (1) möglich ist.

2. Flurförderzeug nach Anspruch 1, **dadurch gekennzeichnet, dass** die Rollenbahn (1) einen fahrzeugfesten Teil (1a) aufweist, der im Bereich des Bodens des Batteriefachs angeordnet ist.

3. Flurförderzeug nach Anspruch 1 oder 2, **dadurch gekennzeichnet, dass** die Rollenbahn (1) mindestens einen bewegbaren Teil (1b) aufweist, der sich in einer zurückgezogenen Stellung im Bereich des Bodens des Batteriefachs befindet und der in Verlängerung des fahrzeugfesten Teils (1a) in eine ausgefahrene Stellung ausfahrbar ist.

4. Flurförderzeug nach einem der Ansprüche 1 bis 3, **dadurch gekennzeichnet, dass** an dem bewegbaren Teil (1b) der Rollenbahn (1) eine bewegbare Stütze (5) vorgesehen ist, mit der die Rollenbahn (1) an einer Fahrbahn abstützbar ist.

5. Flurförderzeug nach einem der Ansprüche 1 bis 4, **dadurch gekennzeichnet, dass** der bewegbare Teil (1b) der Rollenbahn (1) einen Anschlag (4) aufweist, der die Endlage des sich außerhalb des Flurförderzeugs auf der Rollenbahn (1) befindlichen Batterieblocks definiert.

6. Flurförderzeug nach Anspruch 5, **dadurch gekennzeichnet, dass** der Anschlag (4) bewegbar an dem bewegbaren Teil (1b) der Rollenbahn (1) angeordnet ist, derart, dass der sich in der Endlage außerhalb des Flurförderzeugs auf der Rollenbahn (1) befindliche Batterieblock (3) nach außen über das Ende der Rollenbahn (1) hinaus ragt.

7. Flurförderzeug nach Anspruch 5 oder 6, **dadurch gekennzeichnet, dass** der Anschlag (4) bewegbar an dem bewegbaren Teil (1b) der Rollenbahn (1) angeordnet ist, derart, dass der Anschlag (4) bei zurückgezogener Stellung des bewegbaren Teils (1b) vollständig innerhalb die Kontur des Flurförderzeugs bewegbar ist.

8. Flurförderzeug nach einem der Ansprüche 5 bis 7, **dadurch gekennzeichnet, dass** der Anschlag (4) als Griff zum Bewegen des bewegbaren Teils (1b) der Rollenbahn (1) ausgeführt ist.

## Claims

1. Industrial truck, in particular fork-lift truck, having a battery compartment and a battery pack (3), which can be moved in the horizontal direction through a lateral opening of the battery compartment in relation to the battery compartment, a bottom face of the battery compartment being equipped with a roller conveyor (1), and the roller conveyor (1) being designed to have two or more parts, at least one part (1b) of the roller conveyor (1) being capable of being moved out of the battery compartment such that the battery pack (3) can be moved completely out of the industrial truck on the roller conveyor (1), and the industrial truck having a holding apparatus, with which the battery pack is prevented from unintentionally rolling out of the battery compartment, **characterized in that** the holding apparatus is operatively connected to the roller conveyor (1) such that it is possible for the battery pack to roll out of the battery compartment only when the movable part (1b) of the roller conveyor (1) is completely extended and is supported on the roadway.

2. Industrial truck according to Claim 1, **characterized in that** the roller conveyor (1) has a part (1a) which is fixed to the vehicle and is arranged in the region of the bottom of the battery compartment.

3. Industrial truck according to Claim 1 or 2, **characterized in that** the roller conveyor (1) has at least one movable part (1b), which is located in a retracted position in the region of the bottom of the battery compartment and is capable of being extended into an extended position as an extension of the part (1a) which is fixed to the vehicle.

4. Industrial truck according to one of Claims 1 to 3, **characterized in that** a movable support (5) is provided on the movable part (1b) of the roller conveyor (1), with which support the roller conveyor (1) can be supported on a roadway.

5. Industrial truck according to one of Claims 1 to 4, **characterized in that** the movable part (1b) of the roller conveyor (1) has a stop (4), which defines the end position of the battery pack located outside of the industrial truck on the roller conveyor (1).

6. Industrial truck according to Claim 5, **characterized in that** the stop (4) is arranged movably on the movable part (1b) of the roller conveyor (1) such that the battery pack (3), which is located in the end position outside of the industrial truck on the roller conveyor (1), protrudes outwards beyond the end of the roller conveyor (1).

7. Industrial truck according to Claim 5 or 6, **characterized in that** the stop (4) is arranged movably on the movable part (1b) of the roller conveyor (1) such that the stop (4), in the retracted position of the movable part (1b), is capable of being moved completely within the contour of the industrial truck.

8. Industrial truck according to one of Claims 5 to 7, **characterized in that** the stop (4) is in the form of a handle for moving the movable part (1b) of the roller conveyor (1).

## Revendications

1. Chariot de manutention, notamment chariot élévateur à fourche, comprenant un compartiment de batterie et un bloc de batterie (3) qui peut être déplacé dans le sens horizontal par rapport au compartiment de batterie à travers une ouverture latérale du compartiment de batterie, une surface de fond du compartiment de batterie étant équipée d'un train de rouleaux (1) et le train de rouleaux (1) étant réalisé en une ou deux parties, au moins une partie (1b) du train de rouleaux (1) pouvant être déplacée hors du compartiment de batterie de telle sorte que le bloc de batterie (3) puisse être complètement sorti du chariot de manutention sur le train de rouleaux (1) et le chariot de manutention présentant un dispositif d'arrêt qui empêche le bloc de batterie de rouler par inadvertance hors du compartiment de batterie, **caractérisé en ce que** le dispositif d'arrêt est en liaison active avec le train de rouleaux (1) de telle sorte qu'un roulage du bloc de batterie hors du compartiment de batterie n'est possible que lorsque la partie (1b) mobile du train de rouleaux (1) est complètement sortie et soutenue sur la chaussée.

2. Chariot de manutention selon la revendication 1, **caractérisé en ce que** le train de rouleaux (1) présente une partie (1a) fixe sur le véhicule qui est disposée dans la zone du fond du compartiment de batterie.

3. Chariot de manutention selon la revendication 1 ou 2, **caractérisé en ce que** le train de rouleaux (1) présente au moins une partie mobile (1b) qui, dans une position rétractée, se trouve dans la zone du fond du compartiment de batterie et qui peut être sortie dans une position sortie dans la prolongation de la partie (1a) fixe sur le véhicule.

4. Chariot de manutention selon l'une des revendications 1 à 3, **caractérisé en ce que** sur la partie mobile (1b) du train de rouleaux (1) est prévu un appui mobile (5) avec lequel le train de rouleaux (1) peut prendre appui sur une chaussée.

5. Chariot de manutention selon l'une des revendications 1 à 4, **caractérisé en ce que** la partie mobile (1b) du train de rouleaux (1) présente une butée (4) qui définit la position finale du bloc de batterie qui se trouve sur le train de rouleaux (1) à l'extérieur du chariot de manutention.

6. Chariot de manutention selon la revendication 5, **caractérisé en ce que** la butée (4) est disposée de manière mobile sur la partie mobile (1b) du train de rouleaux (1) de telle sorte que le bloc de batterie (3) qui se trouve dans la position finale sur le train de rouleaux (1) à l'extérieur du chariot de manutention fait saillie vers l'extérieur au-delà de l'extrémité du train de rouleaux (1).

7. Chariot de manutention selon la revendication 5 ou 6, **caractérisé en ce que** la butée (4) est disposée de manière mobile sur la partie mobile (1b) du train de rouleaux (1) de telle sorte que lorsque la partie mobile (1b) est en position rétractée, la butée (4) peut être déplacée complètement à l'intérieur du contour du chariot de manutention.

8. Chariot de manutention selon l'une des revendications 5 à 7, **caractérisé en ce que** la butée (4) est réalisée sous la forme d'une poignée pour déplacer la partie mobile (1b) du train de rouleaux (1).
